(19) Europäisches Patentamt
European Patent Office
Office européen des brevets

(11) Publication number: **0 258 906 B1**

# EUROPEAN PATENT SPECIFICATION

(45) Date of publication of patent specification :
**09.01.91 Bulletin 91/02**

(51) Int. Cl.⁵ : **B60Q 7/00**

(21) Application number : **87112969.8**

(22) Date of filing : **04.09.87**

(54) A collapsible warning triangle.

(30) Priority : **05.09.86 FI 863587**

(43) Date of publication of application :
**09.03.88 Bulletin 88/10**

(45) Publication of the grant of the patent :
**09.01.91 Bulletin 91/02**

(84) Designated Contracting States :
**AT BE CH DE ES FR GB GR IT LI LU NL SE**

(56) References cited :
**DE-A- 2 006 275**
**FR-A- 1 266 448**
**FR-A- 2 213 177**
**US-A- 3 734 595**

(73) Proprietor : **OY TALMU AB**
**SF-24100 SALO (FI)**

(72) Inventor : **Ahlfors, Leif**
**Viksvidja**
**SF-25650 Strömma (FI)**

(74) Representative : **Bockhorni, Josef, Dipl.-Ing. et al**
**Herrmann-Trentepohl, Kirschner, Grosse, Bockhorni & Partner Forstenrieder Allee 59**
**D-8000 München 71 (DE)**

## Description

The invention relates to a collapsible warning triangle for cars in particular, comprising a triangle provided with a reflective surface and a bearer structure. This kind of warning triangles are used especially by night but also in the daytime for calling drivers' attention e.g. to a car which is out of order and parked on the roadside. A warning triangle of this type which is defined in the pre-characterising portion of Claim 1 is disclosed in DE-A-2006275.

Although the size, dimensions and properties such as the reflecting properties and steadiness of this type of warning triangles are strictly regulated, there are many types of accepted models available. Commercially available warning triangles differ considerably from each other with respect to their erecting properties and their weight; however, it is becoming increasingly important that the warning triangle, being a compulsory safety means to be transported with the car, can be packed in a space as small as possible, which is partly related to the erecting properties. When packed, warning triangles presently in use in most cases take relatively much space. Warning triangles, of course, also have to be sufficiently steady in windy weather to meet the regulations. Therefore it is customary to provide warning triangles with heavy bearer structures. A heavy and unpractically shaped bearer structure is very common, which is due to the fact that this is the easiest way of making the warning triangle steady. However, it has to be kept in mind that a car should not be loaded with any extra weight and there has, in fact, been a tendency to avoid this in all possible ways.

The object of the present invention is to provide a new improved warning triangle which avoids the disadvantages of prior warning triangles. The invention is based on the idea that a warning triangle can be provided with a bearer structure which not only efficiently supports the triangle but also makes the triangle light as well as foldable into a small size. For the achievement of this object the warning triangle according to the invention is mainly characterized in that the bearer structure comprises four legs essentially equal in length and fastened in pairs adjacent to both ends of a base portion of the triangle by means of hinges which enable the legs to be pivoted essentially within the contours of the reflective surface of the base portion for placing the warning triangle into a case for storage, and further to be pivoted into an extended operative position so that the warning triangle is supported by the legs at four points. The legs are preferably fastened to the ends of the base portion of the triangle and their length is 50 to 100%, preferably about 80%, of the length of the base portion.

The warning triangle is advantageous mainly in that it can be packed into a fairly small space, it is light as well as steady and can be easily mounted in operative position.

In the following the invention will be described in more detail by means of one preferred embodiment with reference to the attached drawing, wherein

Figure 1 is a front view of a warning triangle with the reflective sides thereof in operative position and the legs folded in transport position,

Figure 2 shows the warning triangle when packed in a case for storage, and

Figure 3 is a top view of the warning triangle in operative position.

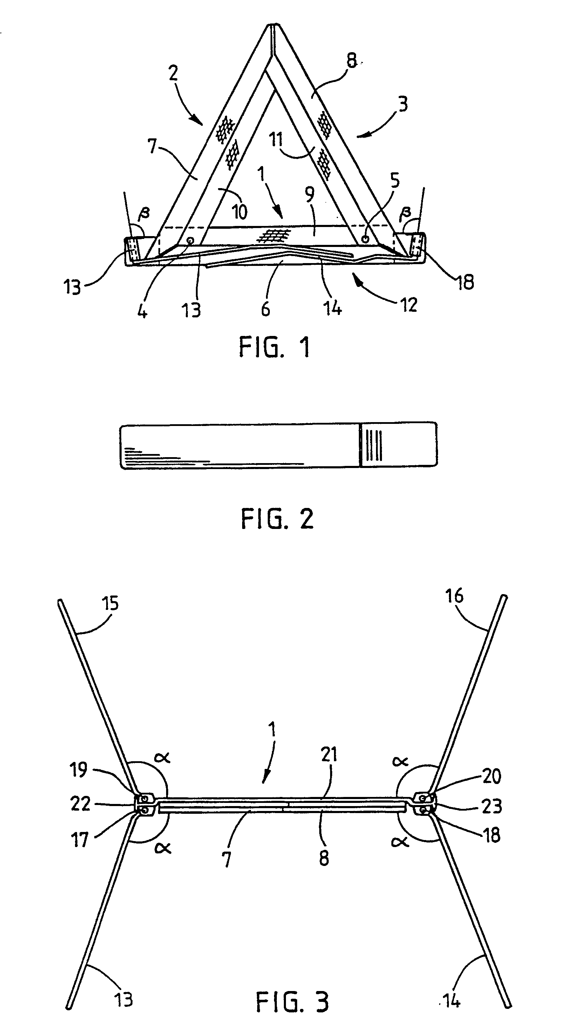

In Figure 1, a base portion of the warning triangle is indicated generally with the reference numeral 1. The two other sides of the triangle are correspondingly indicated with the reference numerals 2 and 3. In the figure, these sides are in their operative position, whereas they are foldable so as to be interlaced with respect to each other by means of hinges 4 and 5 for packing the triangle for storage and transport. Each side 1, 2 and 3 comprises a surface 6, 7, 8 reflective by night and a surface 9, 10, 11 reflective in the daytime. A bearer structure of the triangle, indicated generally with the reference numeral 12, comprises four legs 13 to 16. The legs 15 and 16 are positioned behind the base portion 1 in the figure, wherefore they are not visible. In Figure 1, the legs 13 to 16 are folded into a position for storage or transport against the base portion 1 so that their contours remain essentially within those of the base portion and the night reflection surface 6 thereof, which enables the triangle to be packed in a fairly small space. The legs 13 to 16 are pivotable into the operative position thereof by means of hinges 17 to 20 positioned at the ends of the base portion. The legs are fastened in pairs to the hinges, of which only the forward hinges 17 and 18 are visible in the figure. The position of the backward hinges 19 and 20 appears from Figure 3. Since the hinges 17 and 20 are positioned at the ends of the base portion 1, the legs 13 to 16 can be relatively long and can be folded so that they do not project from the base portion. The axes of the hinges 17 to 20 are preferably parallel to the plane of the base portion 1 and extend obliquely outwards from the base portion at an angle $90° < \beta < 110°$ with respect to the longitudinal axis of the base portion. This results in that when the legs 13 to 16, made of steel wire and shaped in a suitable way, are in the extended position, the free ends thereof thus support the triangle at four points so that the distance of the lower edge of the base portion 1 from the ground complies with the minimium distance required by the regulations concerning warning triangles. If the angle exceeds 110°, the lifting-effect will be excessive and the legs 13 to 16 of the triangle tend to fold against the base portion by themselves, i.e. under the influence of the weight of the triangle itself, when in the operative position.

The lifting effect exerted on the warning tri-angle by the legs 13 to 16 can also be effected by means of hinges the axes of which define an angle µ (not shown in the figure) varying from 0 to 20° with the plane of the base portion 1 so that the axes are positioned at the ends of the base portion in a V-shaped position. Thereby the axes can correspondingly extend obliquely inwards from the base portion 1 so that they define an angle 60°<β<90° with respect to the longitudinal axis of the base portion. In practice, the maximum value of the angle µ is about 20°, because with greater values the hinges would require unreasonably much space, whereby the triangle would take much space when packed. When the angle µ exceeds about 20°, it is difficult to manufacture the legs 13 to 16 by bending so that the bending points have a sufficiently small radius adjacent to the hinges. It is clear that several suitable combinations of the angles β and µ are possible, which in practice makes it possible to adjust the base portion of the warning triangle at a suitable height from the ground.

When the legs 13 to 16 are manufactured of steel wire, they are suitably light and resilient so that the triangle will be supported at four points even when it is positioned on an uneven surface. The length of each leg 13 to 16 is 50 to 100% of the length of the base portion 1 of the triangle. The preferred length of the legs can be supposed to be 70 to 90% of the length of the base portion 1, because they thereby provide a good supporting surface and do not project from the ends of the base portion when folded.

Figure 2 shows a case for storing and transporting a warning triangle according to the invention.

In Figure 3, the warning triangle is shown in a top view in operative position with the triangle and the legs 13 to 16 extended. The legs of the triangle are positioned symmetrically with respect to the triangle and preferably define an angle α varying between 90 and 100° with respect to the longitudinal axis of the base portion 1 so that the free ends of the legs form a rectangular supporting surface for the triangle, which surface covers the whole triangle. As distinct from the above, the angle α may also range between 80 and 130° ; however, if the angle α exceeds 130° or is smaller than 80°, the steadiness of the triangle suffers if the weight of the triangle is not correspondingly increased. Furthermore, too small an angle makes it difficult to provide a sufficient distance between the base portion 1 of the triangle and the ground and/or to shape the legs and fold them against the base portion 1 so that they do not take excessive space when packed, i.e. it would be difficult to fold the legs within the contours of the base portion 1.

The legs 13 to 16 of the triangle can be made light by virtue of the fact that they are advantageously positioned at the ends of the base portion 1. However, it is obvious that too light a warning triangle may be easily moved by the wind. For this reason the warning triangle according to the invention may be provided with a metal supporting plate 21 which is parallel to the base portion 1 and essentially equal in size therewith. The base portion 1 is fastened to the supporting plate 21 so that the base portion becomes more steady ; further, the plate provides a good fastening point for hinge parts 22 and 23.

The invention has been described above merely by means of one of its preferred embodiments. The different details of the warning triangle, such as the locking of the legs, can be effected in various ways within the scope of the attached claims. Accordingly, it is possible to modify e.g. the locking, precise shape and manufacturing material of the legs as well as the structure and shaping of the hinges. The day reflection parts can be effected by means of fixed parts or cloth tapes. In the latter case it can be assumed that the warning triangle can be packed in a very small space, whereas the assembly is thereby correspondingly more difficult.

## Claims

1. A collapsible warning triangle for cars in particular, comprising a triangle provided with a reflective surface (6 to 11) and a bearer structure (12) comprising four legs (13 to 16) essentially equal in length and fastened in pairs adjacent to both ends of a base portion (1) of the triangle by means of hinges (17 to 20) which enable the legs to be pivoted from an extended operative position in which the warning triangle is supported by the legs at four points, into a position in which the legs are essentially within the contours of said base portion (1) for placing the warning triangle into a storage position characterized in that

   – the legs (13 to 16) are resilient and their length is 50 to 100% of the length of the base portion (1) and

   – the legs (13 to 16) are pivotable essentially within the contours of the reflective surface (6) of the base portion (1).

2. A warning triangle according to claim 1, characterized in that the legs (13 to 16) are fastened to the ends of the base portion (1) of the triangle and the length of the legs is preferably about 80% of the length of the base portion.

3. A warning triangle according to claim 1 or 2, characterized in that the legs (13 to 16) are by means of said hinges (17 to 20) symmetrically pivotable with respect to the triangle so that they are at an angle 90°≤α≤120° with respect to the longitudinal axis of the base portion (1) of the triangle, whereby the free ends of the legs form a rectangular supporting surface which covers the entire triangle.

4. A warning triangle according to claim 4, characterized in that the legs are manufactured of steel wire.

5. A warning triangle according to any of the preceding claims, **characterized** in that the bearer structure (12), further comprises a metal supporting plate(21) whereto the hinges (17 to 20) and the base portion (1) are fastened and which is parallel to and essentially equal in size with the base portion.

6. A warning triangle according to any of the claims 2 to 6, **characterized** in that the axes of the hinges (17 to 20),are parallel with the plane of the base portion (1) and extend obliquely outwards from the base portion at an angle 90°<β<110° with respect to the longitudinal axis of the base portion.

7. A warning triangle according to any of the claims 2 to.5, **characterized** in that the axes of the hinges (17 to 20) define an angle from 0 to 20° with the plane of the base portion (1), whereby they are positioned in a V-shaped position at the ends of the base portion and extend obliquely inwards from the base portion so that they are at an angle 60°<β<90° with respect to the longitudinal axis of the base portion.

**Ansprüche**

1. Zusammenlegbares Warndreieck insbesondere für Automobile, bestehend aus einem Dreieck mit reflektierender Oberfläche (6 bis 11) und einer Stützvorrichtung (12) mit vier Beinen (13 bis 16), die im wesentlichen gleich lang sind und in Paaren nebeneinander an beiden Enden des Basiselementes (1) des Dreiecks mit Gelenken (17 bis 20) befestigt sind, wodurch die Beine von ihrer ausgeklappten Arbeitsstellung, bei welcher das Warndreieck an vier Punkten durch die Beine gestützt wird, in eine Position geschwenkt werden können, in welcher die Beine sich im wesentlichen innerhalb des Umrisses des Basiselementes (1) befinden, um das Warndreieck in eine Lagerungsposition zu bringen, **dadurch gekennzeichnet,**
   – daß die Beine (13 bis 16) nachgiebig sind und ihre Länge 50 bis 100% der Länge des Basiselementes (1) beträgt und
   – daß die Beine (13 bis 16) im wesentlichen innerhalb des Umrisses der reflektierenden Fläche (6) des Basiselementes (1) schwenkbar sind.

2. Warndreieck nach Anspruch 1, dadurch gekennzeichnet, daß die Beine (13 bis 16) an den Enden des Basiselementes (1) des Dreiecks befestigt sind und daß die Länge der Beine vorzugsweise 80% der Länge des Basiselementes beträgt.

3. Warndreieck nach Anspruch 1 oder 2, dadurch gekennzeichnet, daß die Beine (13 bis 16) durch die Gelenke (17 bis 20) symmetrisch in Bezug auf das Dreieck schwenkbar sind, so daß diese bezüglich der Längsachse des Basiselementes (1) des Dreiecks einen Winkel von 90° ≤α≤120°C bilden, wodurch die freien Enden der Beine eine rechteckige Stützfläche bilden, die das gesamte Dreieck abdeckt.

4. Warndreieck nach Anspruch 4, dadurch gekennzeichnet, daß die Beine aus Stahldraht hergestellt sind.

5. Warndreieck nach einem der vorhergehenden Ansprüche, dadurch gekennzeichnet, daß die Stützvorrichtung (12) weiterhin mit einer Metallstützplatte (21) versehen ist, an welcher die Gelenke (17 bis 20) und das Basiselement (1) befestigt sind und die parallel zum Basiselement angeordnet ist und im wesentlichen die gleiche Größe wie diese aufweist.

6. Warndreieck nach einem der Ansprüche 2 bis 6, dadurch gekennzeichnet, daß die Achsen der Gelenke (17 bis 20) parallel zur Ebene des Basiselementes (1) verlaufen und sich vom Basiselement schräg nach außen in einem Winkel von 90°<β<110° bezüglich der Längsachse des Basiselementes erstrecken.

7. Warndreieck nach einem der Ansprüche 2 bis 5, dadurch gekennzeichnet, daß die Achsen der Gelenke (17 bis 20) mit der Ebene des Basiselementes (1) einen Winkel von 0 bis 20° beschreiben, wodurch sie an den Enden des Basiselementes in eine V-förmige Stellung gebracht werden und vom Basiselement schräg nach innen verlaufen, so daß sie bezüglich der Längsachse des Basiselementes einen Winkel von 60°<β<90° bilden.

**Revendications**

1. Triangle de signalisation pliable notamment pour voitures, composé d'un triangle pourvu d'une surface réfléchissante (6 à 11) et d'une structure de support (12) munie de quatre pieds (13 à 16) ayant essentiellement la même longueur et étant attachés par paires juxtaposées aux deux extrémités de l'organe de base (1) du triangle par l'intermédiaire d'articulations (17 à 20), ce qui rend possible aux pieds d'être pivotés d'une position d'utilisation déployée telle que le triangle est supporté par les pieds à quatre points, dans une position maintenant les pieds essentiellement au dedans du contour dudit organe de base (1) pour placer le triangle de signalisation dans une position de stockage, **caractérisé par le fait que**
   – les pieds (13 à 16) sont résilients et ont une longueur s'élévant à 50 à 100% de la longueur de l'organe de base (1) et que
   – les pieds (13 à 16) sont essentiellement pivotables au dedans du contour de la surface réfléchissante (6) de l'organe de base (1).

2. Triangle de signalisation selon revendication 1, caractérisé par le fait que les pieds (13 à 16) sont attachés aux extrémités de l'organe de base (1) du triangle de signalisation et que lesdits pieds ont une longueur s'élévant de préférence à environ 80% de la longueur de l'organe de base.

3. Triangle de signalisation selon revendication 1 ou 2, caractérisé par le fait que les pieds (13 à 16) sont pivotables symétriquement relatif au triangle par l'intermédiaire desdites articulations (17 à 20), de sorte qu'ils forment un angle de 90°≤α≤120° par rapport à l'axe longitudinal de l'organe de base (1) du triangle, les extrémités libres constituant une surface de support rectangulaire couvrant l'ensemble du triangle.

4. Triangle de signalisation selon revendication 4, caractérisé par le fait que lesdits pieds sont fabriqués de fil d'acier.

5. Triangle de signalisation selon l'une des revendications précédentes, caractérisé par le fait que la structure de support (12) est en outre pourvue d'une plaque de support métallique (21) à laquelle les articulations (17 à 20) et l'organe de base (1) sont attachés, ladite plaque étant parallèle audit organe de base et ayant essentiellement la même longueur que ledit organe de base.

6. Triangle de signalisation selon l'une des revendications 2 à 6, caractérisé par le fait que les axes des articulations (17 à 20) sont parallèles au plan de l'organe de base (1) et s'étendent obliquement de l'organe de base vers l'extérieur à un angle de 90°<β<110°C relatif à l'axe longitudinal de l'organe de base.

7. Triangle de signalisation selon l'une des revendications 2 à 5, caractérisé par le fait que les axes des articulations (17 à 20) décrivent un angle de 0 à 20° avec le plan de l'organe de base (1), tel qu'ils sont placés dans une position en V aux extrémités de l'organe de base et s'étendent obliquement de l'organe de base vers l'intérieur, de sorte qu'ils forment un angle de 60°<β<90° relatif à l'axe longitudinal de l'organe de base.

FIG. 1

FIG. 2

FIG. 3